# EUROPÄISCHE PATENTSCHRIFT

(11) **EP 2 996 791 B1**
(45) Veröffentlichungstag und Bekanntmachung des Hinweises auf die Patenterteilung: **02.09.2020**
(21) Anmeldenummer: 14714991.8
(22) Anmeldetag: 31.03.2014
(51) Int. Cl.: B01D 46/00, B01D 53/04, F02M 35/024

(54) **FILTERELEMENT, INSBESONDERE LUFTFILTERELEMENT, UND FILTERSYSTEM MIT EINEM FILTERELEMENT**
FILTER ELEMENT, IN PARTICULAR AIR FILTER ELEMENT, AND FILTER SYSTEM WITH A FILTER ELEMENT
ÉLÉMENT DE FILTRE, EN PARTICULIER ÉLÉMENT DE FILTRE À AIR, ET SYSTÈME DE FILTRE POURVU D'UN ÉLÉMENT DE FILTRE

(30) Priorität: 17.05.2013 DE 102013008389
(43) Veröffentlichungstag der Anmeldung: 23.03.2016
(73) Patentinhaber: Mann + Hummel GmbH, 71636 Ludwigsburg (DE)
(72) Erfinder: VOLK, Mathias, 67166 Otterstadt (DE); PEMSEL, Thomas, 71638 Ludwigsburg (DE); SCOPE, Andreas, 09600 Oberschoena (DE); UNGER, Ina, 71282 Hemmingen (DE); WEISS, Dieter, 95482 Gefrees (DE); FASOLD, Michael, 71549 Auenwald (DE)
(86) Internationale Anmeldenummer: PCT/EP2014/056456
(87) Internationale Veröffentlichungsnummer: WO 2014/183918

(56) Entgegenhaltungen:
- EP-A1- 0 045 516
- EP-A2- 0 159 697
- DE-A1-102004 000 048
- US-A- 4 227 904
- US-A1- 2010 044 297

## Beschreibung

### Technisches Gebiet

Die Erfindung betrifft ein Filterelement, insbesondere zur Verwendung als Luftfilter, sowie ein Filtersystem mit einem solchen Filterelement.

### Stand der Technik

Aus der EP 1349 638 B1 ist ein Filterelement für ein Brennstoffzellensystem bekannt, bei dem Aktivkohle als adsorbierendes Filtermedium eingesetzt wird. Beispielsweise wird ein Bett von Aktivkohle in einem zylindrischen Filter vorgeschlagen. Das Filterelement wird einer Brennstoffzelle vorgeschaltet und dient zur Reinigung der Kathodenluft.

Weiterhin ist aus der EP0159697 A2 ein Filterelement bekannt, welches eine Kombination aus Partikelfilter und einer Filterlage mit einem Adsorbens aufweist, das in Gasmasken Verwendung findet.

Eine Aufgabe der Erfindung ist es, ein robustes Filterelement insbesondere zur Filterung von Luft zu schaffen.

Eine weitere Aufgabe der Erfindung ist es, ein Filtersystem mit einem derartigen Filterelement anzugeben.

Die vorgenannten Aufgaben werden durch den Gegenstand der Ansprüche 1 und 13 gelöst.

Günstige Ausgestaltungen und Vorteile der Erfindung ergeben sich aus den weiteren Ansprüchen, der Beschreibung und der Zeichnung.

### Offenbarung der Erfindung

Es wird ein Filterelement vorgeschlagen, mit einem Filterkörper, mit einer in sich geschlossenen Außenseite, die eine in sich geschlossene Innenseite umgibt, wobei die Innenseite (52) einen zentralen Strömungsraum umschließt, wobei zwischen Außenseite und Innenseite wenigstens ein Filtermedium angeordnet ist, und wobei der Filterkörper Wickellagen mit wenigstens einem Adsorbens umfasst.

Vorteilhaft sind gewickelte Lagen bzw. Wickellagen ohne separate Rillen, wie sie etwa bei plissierten Filterkörpern oder bei Verwendung von geprägten Filtermedien, auftreten, oder definierte Durchströmungskanäle ausgebildet, was die Herstellung und die Handhabung des Filterelements erleichtert. Bei dem Filterelement ist kein wechselseitiger Verschluss der Luftführungskanäle erforderlich, was die Herstellung erleichtert. Konventionelle Filterelemente mit Filterkörpern aus plissierten Filtermedien bieten aufgrund der hohen Strömungsgeschwindigkeiten nicht die erforderliche Kontaktzeit, die für eine zuverlässige Adsorption bzw. Absorption von Schadstoffe im Filter sorgt, was kritisch für die Funktionalität eines Filters zur Gasreinigung bzw. die Filtrationseffizienz und/oder Adsorptionseffizienz ist. Dies gilt besonders für Filterelemente mit hohem Durchfluss des zu filternden Mediums, etwa bei Brennstoffzellensystemen, insbesondere bei Brennstoffzellensystemen höherer Leistungsklassen z.B. für Kraftfahrzeuge oder Stationäranwendungen. Durch die Ausgestaltung mit Wickellagen bietet das Filterelement eine ausreichend hohe Kontaktzeit des zu filternden Mediums mit dem Adsorbens, welche das zu filternde Medium dabei reinigen kann.

Neben der Dicke des Wickels, d.h. des Filterelements, die sich aus Anzahl der Wickellagen im Filterelement und Dicke pro Wickellage ergibt, ist auch die Form des Wickelfilters variabel. Neben der üblichen kreisrunden Form sind auch andere Querschnitte, wie elliptische, dreieckige, polygone Formen möglich. Diese Formen lassen sich auf einfache Weise durch Aufwickeln eines flachen Trägerkörpers auf einen geeigneten Innenkern herstellen. Damit ist eine optimale Bauraumausnutzung möglich.

Das Design des Filterelements ist unkompliziert und robust und erlaubt lange Standzeiten im Einsatz. Weiterhin können Filtereigenschaften z.B. durch gezielte Verteilung von weiteren Komponenten in der wenigstens einen Wickellage in radialer und/oder auch axialer Richtung des Filterelements vorgegeben werden.

Insbesondere kann das Filterelement ein Luftfilterelement sein.

Das wenigstens eine Adsorbens kann wenigstens ein Material aus der Gruppe Aktivkohle, Zeolithe, Silicagele, Metalloxide, Molekularsiebe, Schichtsilikate, Nanoclays umfassen.

Generell können Adsorbenslagen hinsichtlich Materialauswahl (z.B. Aktivkohlesorte, Zeolithe, Silicagele, Metalloxide wie Aluminiumoxid, Kupferoxid oder Manganoxid, Molekularsiebe wie z.B. MOFs (MOF = Metal Organic Framework), Schichtsilikate, Nanoclays) und/oder deren Flächengewicht ausgewählt werden, um eine gezielte Anpassung an die Adsorptionsaufgabe zu realisieren. Als Nanoclays bezeichnet man Nanopartikel aus mineralischen Schichtsilikaten.

Ein sinnvoller Flächengewichtsbereich pro Wickellage liegt z.B. zwischen wenigstens 10 g/m² bis zu 4000 g/m², bevorzugt zwischen wenigstens 100 g/m² bis 2000 g/m².

Gemäß der vorliegenden Erfindung umfasst der Filterkörper einen Trägerkörper, auf den eine Schicht mit wenigstens einem Adsorbens aufgetragen ist, und durch Aufwickeln des Trägerkörpers, beispielsweise auf einen geeigneten Innenkern mit gewünschtem Durchmesser und gewünschtem Querschnitt, seine Form erhalten, beispielsweise durch Aufwickeln auf einem zylinderförmigen Innenkern mit einem kreisrunden Querschnitt. Dabei kann der Trägerkörper zur Immobilisierung des Adsorbens z.B. aus zwei Lagen bandförmigen Trägermaterials bestehen, zwischen denen eine Adsorbenslage angeordnet ist, oder auch aus einer einzelnen Lage bandförmigen Trägermaterials, auf der das Adsorbens in geeigneter Weise immobilisiert ist. Dabei kann das Immobilisieren des wenigstens einen Adsorbens auf verschiedene Arten erfolgen, beispielsweise durch Einbetten in eine Klebemasse, in Kontaktbringen mit Klebefäden, Klebepunkten, Klebefolien und dergleichen.

Das Adsorbens kann in beliebigen Ausprägungen verwendet werden, wie etwa als beliebig geformtes Granulat, als definiert geformtes Granulat (in Kugelform, Stäbchenform etc.), Pulver und dergleichen. Ebenso kann das wenigstens eine Adsorbens geeignet imprägniert sein und/oder mit anderen Adsorbentien und/oder Absorbentien vermischt sein, um etwa unerwünschte chemische Bestandteile aus dem zu filternden Medium zu speichern und/oder zu neutralisieren und/oder umzusetzen. Dabei kann eine Verteilung von entsprechenden Komponenten auf dem Trägerkörper vor dem Aufwickeln in geeigneter Weise so erfolgen, dass nach dem Aufwickeln z.B. mehrere Lagen gezielt eine erste Komponente aufweisen, gefolgt von weiteren Wickellagen mit anderen oder zusätzlichen Komponenten, oder es kann die Verteilung so gewählt werden, dass sich im gewickelten Filterelement ein Gradient in radialer Richtung von einer oder mehreren Komponenten einstellt.

Insbesondere können in der Wickellage mindestens zwei Adsorbentien und/oder Absorbentien hintereinander aufgebracht sein und dadurch im radial gesehen inneren Bereich des Wickels (z.B. über einige Lagen hinweg) sich ein anderes Adsorbens bzw. Absorbens befinden als im radial gesehen äußeren Bereich des Wickels. Dabei ist es nicht zwingend, dass die Adsorbentien bzw. Absorbentien auf demselben bzw. auf einem einstückigen Trägerkörper und/oder Deckmedium aufgebracht sind.

Der Wickel kann so ausgeführt werden, dass Wickellagen mit unterschiedlichen Flächengewichten radial aufeinander folgen, um eine gewünschte Adsorptionswirkung zu erzielen. So kann z.B. für ein bestimmtes Zielgas, das als gefiltertes Medium auf der Reinseite erhalten wird, eine ganz bestimmte Menge eines hierfür optimierten Adsorbens (z.B. imprägnierte Aktivkohle, Zeolith, Silicagel, Metalloxid, wie etwa Aluminiumoxid, Kupferoxid, Manganoxid, Molekularsiebe wie z.B. MOFs, Schichtsilikate, Nanoclays) in einer Wickellage eingesetzt werden. Gegenüber einer klassischen Adsorbensschüttung oder einem Adsorbensschaum, z.B. einem Aktivkohleschaum, lässt sich eine definiert anströmseitige und/oder abströmseitige Position einer solchen Wickellage verwirklichen. Mit der gezielten Anordnung definierter Adsorberlagen kann auf Gegebenheiten reagiert werden, wie darauf, dass bestimmte Gasmoleküle bevorzugt anströmseitig adsorbiert werden, andere Gasmoleküle bevorzugt abströmseitig.

Eine einzelne Adsorbenslage kann auch aus Mischungen verschiedener Adsorbentien realisiert werden (z.B. unterschiedlich imprägnierte Aktivkohlen, Zeolithe, Silicagele, Metalloxide wie Aluminiumoxid, Kupferoxid, oder Manganoxid, Molekularsiebe wie z.B. MOFs, Schichtsilikate, Nanoclays).

Der Trägerkörper dient zur Immobilisierung von Komponentenpartikeln, wie z.B. Adsorbenspartikeln, und zur Stabilisierung des Wickelaufbaus des Filterelements. Gut geeignet ist hierfür z.B. Vliesstoff. Günstigerweise können solche Vliesstofflagen auch einen Teil der Partikelfiltration übernehmen. Für höhere Partikel-Abscheidegrade aus dem zu filternden Medium und Staubspeicherkapazitäten ist die gezielte Ausführung des Trägerkörpers im Wickel als Partikelfilterlage sinnvoll. Statt einfacher Spinnvliese können dabei auch Feinfaserlagen (z.B. sog. Meltblown-Fasern) oder Feinst- und Nanofaserlagen (z.B. mittels Electrospinning hergestellt) zum Einsatz kommen. Die Partikelfilterlage kann in sich aus mehreren Vlieslagen bzw. Faserlagen bestehen. Diese Partikelfilterlagen können anströmseitig und/oder abströmseitig und/oder als Trägerkörper für das Adsorbens als Zwischenlagen zwischen Adsorbenslagen im Wickel eingesetzt werden.

Weiterhin ist die Kombination der gewickelten Träger- und Adsorbenslagen mit einem zusätzlichen Partikelfilterelement (insbesondere plissiert) möglich.

Durch eine Ausführung von z.B. Vlieslagen als partikelfiltrierende Lage und als Trägerkörper für das Adsorbens kann eine Partikelabscheidung in die Wickellagenanordnung integriert werden. Alternativ oder zusätzlich können an einer Innenwand und/oder Au-ßenwand des Filterkörpers weitere Filterelemente mit ergänzenden Filterfunktionen angekoppelt sein, etwa als Überzug über die Innenwand und/oder Außenwand.

Die Wickellagen mit wenigstens einem Adsorbens können dabei aus folgenden günstigen Varianten aufgebaut sein:
a. Trägerkörper mit einem Adsorbens einer bestimmten Sorte, etwa einer bestimmten Aktivkohlesorte, und Deckmedium zum Abdecken des einen Adsorbens;
b. Trägerkörper mit einer Mischung von Adsorbentien aus mehreren unterschiedlichen Adsorbentiensorten, etwa mehreren Akivkohlesorten, und Deckmedium zum Abdecken der Adsorbentien;
c. Trägerkörper mit mindestens zwei Lagen unterschiedlicher Adsorbentien und Deckmedium zum Abdecken der Adsorbentien;
d. Variante a bis c ohne ein Deckmedium zum Abdecken der Adsorbentien;
e. Variante a bis c mit oder ohne ein Deckmedium zum Abdecken eines Adsorbens, etwa Aktivkohle, mit anderen Adsorbentien und/oder Absorbentien, z.B. Molekularsiebe und dergleichen. Durch diese Anordnung erhält man im Querschnitt des Wickels permanent wechselnde Adsorptionslagen bzw. Absorptionslagen mit unterschiedlichen Eigenschaften, die bei der Herstellung des Filterelements nach Bedarf gestaltet werden können.

Gemäß einer günstigen Weiterbildung kann die gewickelte Adsorbentienlage an ihren Kanten eine Versiegelung aufweisen. Dabei kann die Versiegelung der Längskanten des Trägerkörpers eine stirnseitige Endplatte bilden. Diese kann bereits beim Aufwickeln des Trägerkörpers gebildet werden. So kann an den beiden seitlichen Enden der Flachlage entlang der Längserstreckung des Trägerkörpers eine Versiegelung über ein Verschlusselement erfolgen. Beispielsweise kann ein Verschlusselement über einen Klebstoff, Schaum, Thermoplast, Klammer, Schweißprozess oder eine Kombination aus den zuvor genannten Möglichkeiten gebildet werden. Denkbar ist auch der Einsatz von Heißkleber direkt während des Wickelprozesses, wenn die nachfolgende Wickellage auf die vorhergehende Wickellage aufgewickelt wird und der Heißkleber im Randbereich der Wickellagen noch ausreichend flüssig ist, um sich mit dem Kleber der vorherigen Wickellage dichtend zu verbinden.

Die Versiegelung an den Stirnseiten des Filterelements kann auch durch eine nachträgliche thermoplastische Umformung erfolgen, indem ein Versiegelungselement auf die jeweilige Stirnseite aufgeschmolzen und verformt wird. Das Aufschmelzen kann z.B. über Ultraschall, Heizspiegel, Infrarotbestrahlung, Heißluft erfolgen und die Verformung durch Anpressen des Versiegelungselementes auf die Stirnfläche und über deren Außenkante.

Als weitere Option besteht auch die Möglichkeit der Verwendung einer separaten Endscheibe, wie sie bei Öl- oder Kraftstofffilterelementen bekannt sind.

Eine Versiegelung der Enden des Trägerkörpers, d.h. der axialen Kante der ersten und/ oder der letzten Wickellage im aufgewickelten Zustand kann ebenfalls mit den oben aufgeführten Methoden erfolgen. Hiermit kann das Umströmen des wenigstens einen Adsorbens in den Wickellagen des Filterelements sichergestellt und Leckagen unterbunden werden.

Zweckmäßigerweise kann der Endbereich der Wickellagen am Außenmantel und/oder Innenmantel des aufgewickelten Filterelements fixiert sein. Die Fixierung kann über eine Länge und/oder Breite von wenigen Millimetern, vorzugsweise ca. 5 Millimeter bis zu mehreren Zentimetern ausgebildet sein. Sie kann z.B. erfolgen durch Verklebung der äußersten und/oder innersten Wickellage auf die darunter liegende Wickellage und mittels der Versiegelung fixiert werden, bzw. über zusätzliche Fixierelemente wie Klebstoff, Fixiernetze, Fixiergitter, Gummis, ein zylindrisches, für das zu filternde Medium durchlässiges Element (etwa Gitter, Filtermaterial oder poröses Vollmaterial), Klammern oder in die Wickellage eingebrachte Fasern, Drähte etc., welche dann in Verlängerung mindestens einmal vollständig um den ganzen Wickel des Filterkörpers herumgewickelt werden und mit den darunter befindlichen Wickellagen (Filterlage oder Faser-Drahtlage). Dies kann z.B. durch Verschweißen, Verkleben, Verknoten, Vernähen etc. erfolgen.

Gemäß der Erfindung ist der Filterkörper strömungsmäßig mit wenigstens einem Partikelfilter gekoppelt. Alternativ oder zusätzlich kann der Filterkörper strömungsmäßig mit wenigstens einem Aerosolfilter gekoppelt sein. Diese können in einem Filtersystem unabhängig vom Filterelement ausgetauscht werden.

Zur Abscheidung von Partikeln ist erfindungsgemäss ein Partikelabscheidemedium auf die Mantelfläche des Wickels in Form einer Flachlage oder als gefaltete, insbesondere plissierte, Ausführung aufgebracht, welche optional mit der gleichen Abdichtung (Versiegelung) oder einer anderen der oben beschriebenen stirnseitigen Versiegelungen versehen oder als separates Element auf den Wickel aufsteckbar oder aufschiebbar angeordnet sein kann. Bei der gefalteten (plissierten) Ausführung des Elements kann die Stirnseite auch über ein Seitenband, eine Folie oder eine aushärtende Klebeschicht abgedichtet sein. Zur Absicherung, dass keine Partikel aus dem chemischen Filter durch das zu filternde Medium mitgerissen werden, kann optional in Abströmrichtung, z.B. im Kern des Wickels bei einer Strömungsrichtung durch das Filterelement von außen nach innen, ein Partikelabscheideelement als Sicherheitselement (auch bekannt als Sekundärelement oder "Polizeifilter") integriert sein, welches entweder direkt von dem Austritt des zu filternden Mediums angebracht ist oder z.B. die innerste Lage des Wickels darstellt. Dabei kann der Partikelabscheider als separates Element oder als integrierte Variante eingebracht sein, wobei bei der integrierten Variante ein spezielles Material bzw. optional der Trägerkörper als Partikellage genutzt werden kann. Bei der Variante direkt vor dem Austritt des zu filternden Mediums kann der Partikelfilter mit z.B. einem Anschlusselement einstückig, z.B. mittels Verschweißung, bzw. mehrteilig, z.B. mittels Verklebung, Klemmung, Verpressung (z.B. eines offenporigen Schaums) verbunden sein. Insbesondere kann der Partikelfilter aus einem offenporigen Schaum bestehen, der elastisch und aufgrund dieser Eigenschaft selbstabdichtend ist.

Gemäß einer günstigen Weiterbildung kann das Filterelement im Wesentlichen gehäuselos so ausgebildet sein, dass das Filterelement eine durchströmbare Außenseite umfasst. Die Strömungsrichtung kann dabei nach Bedarf von innen nach außen oder von außen nach innen festgelegt werden. Durch die gehäuselose Bauart ist die Herstellung des Filterelements besonders preisgünstig und das Filterelement entsprechend leicht und kompakt.

Eine Realisierung einer günstigen Anschlussgeometrie an das Filterelement kann trotz gehäuseloser Bauart auf unaufwändige Art über ein Stutzenelement erfolgen, welches von einer Stirnseite aus in den Wickel des Filterkörpers mehr oder weniger hineinragt und mit der stirnseitigen Versiegelung des Wickels luftdicht verbunden ist. Je nach Eindringtiefe des Stutzenelements in den Wickel hinein kann es hinsichtlich der Stabilität des Filterkörpers sinnvoll sein, eine Auflagefläche an das Stutzenelement anzuformen, auf der die Stirnseite des Wickels aufliegt. Je nach Ausführung des Stutzenelements kann auch auf ein Hineinragen in den Wickel hinein komplett verzichtet werden, wenn eine ausreichend feste Verbindung der Stirnseitenversiegelung mit dem Stutzenelement erreicht werden kann. Optional kann auch ein entsprechendes Stutzenelement an beiden Stirnseiten angebracht werden, wobei dann das zweite Stutzenelement nicht zwingend die gleichen Abmessungen wie das erste Stutzenelement haben muss. Das Stutzenelement kann zur weiteren Kontaktierung über eine geeignete Anschlussstruktur verfügen, z.B. ein Tannenbaumprofil oder eine vergleichbare Aufsteckgeometrie, einen Bajonettverschluss, ein Schraubgewinde mit axialer oder radialer Abdichtung und dergleichen. Auch der Einsatz einer üblichen Schnellkupplung ist dabei möglich, wobei dann das Stutzenelement entweder die Schnellkupplung darstellt bzw. beinhaltet oder gar das einzuschiebende Anschlussstück der Fluidleitung (Rohrstück, Schlauchstück) welches in eine solche Kupplung eingesteckt wird, darstellt. Ebenso kann beispielsweise ein weiteres Filterelement an das Stutzenelement zur Vergrößerung der Filterfläche angeschlossen werden.

Das Stutzenelement kann bei Bedarf auch weitere Austrittsstutzen aufweisen. Weiterhin kann das Stutzenelement mit einer Geometrie (z.B. Außensechskant) versehen sein, welche ermöglicht, dass über handelsübliches Werkzeug eine sichere Verschraubung bzw. Verbindung mit der Medienleitung hergestellt werden kann, in die das gereinigte Medium eingeführt werden soll. Das Stutzenelement kann dabei aus Kunststoff oder Metall hergestellt sein.

Als weitere Option kann das Stutzenelement auch an das Filterelement in der Form angebracht werden, dass dieses direkt mit einer Vergussmasse an den Filterkörper angegossen wird. Dabei erfolgt die Versiegelung und Befestigung an der Stirnseite durch die Vergussmasse, welche nach dem Aushärten vergleichbar fest sein kann wie ein konventioneller Thermoplast, wie z.B. Polypropylen oder Polyamid.

Gemäß einem weiteren Aspekt der Erfindung wird eine Anordnung von Filterelementen vorgeschlagen, wobei wenigstens zwei Filterelemente strömungsmäßig in Reihe geschaltet sind. Dies erlaubt eine Segmentierung einer Filterstrecke in der Art eines Baukastensystems. Dabei strömt das zu filternde Medium jeweils durch die Wandfläche eines Filterelements, z.B. von außen nach innen. Die Filterelemente können starr oder flexibel miteinander verbunden sein, so dass ein vorhandener Bauraum vorteilhaft genutzt werden kann.

Günstigerweise können ein oder mehrere Filterelemente strömungsmäßig bedarfsweise zuschaltbar oder abschaltbar sein. Hierdurch kann die Filterfläche entsprechend vergrößert oder verkleinert werden. So können insbesondere kurzzeitige Lastspitzen bei der Versorgung eines Systems mit dem gefilterten Medium berücksichtigt werden.

Gemäß einem weiteren Aspekt wird die Verwendung eines erfindungsgemäßen Filterelements als Luftfilter und weiterhin insbesondere als Innenraumluftfilter eines Kraftfahrzeugs, vorgeschlagen. Durch die einfache Konstruktion und die leichte und kompakte Bauweise kann wertvoller Bauraum im Fahrzeug eingespart werden. Das Filtermedium Adsorbens, beispielsweise Aktivkohle, sowie die Möglichkeit, Adsorbentien und/ oder Absorbentien sowie chemisch wirksame Komponenten mit dem Filtermedium zu kombinieren, erlaubt einen Einsatz nicht nur im Personenkraftwagenbereich, sondern auch als Filterelement in Nutzfahrzeugen, bei denen mit der Exposition von gesundheitsbedenklichen Stoffen gerechnet werden muss, beispielsweise bei landwirtschaftlichen Nutzfahrzeugen, die Pestizide und dergleichen versprühen. Das Filterelement kann bei Bedarf leicht ausgetauscht werden.

Gemäß einem weiteren Aspekt wird die Verwendung eines erfindungsgemäßen Filterelements als Luftfilter in einer Brennstoffzellenanlage vorgeschlagen. Das Filterelement kann bei Bedarf leicht ausgetauscht werden.

Gemäß einem weiteren Aspekt wird ein Filtersystem mit einem erfindungsgemäßen Filterelement vorgeschlagen, wobei das Filterelement einen Filterkörper aufweist, mit einer in sich geschlossenen Außenseite, die eine in sich geschlossene Innenseite umgibt, wobei die Innenseite einen zentralen Strömungsraum umschließt, wobei zwischen Außenseite und Innenseite wenigstens ein Filtermedium angeordnet ist, und wobei der Filterkörper wenigstens bereichsweise eine Wickellage mit wenigstens einem Adsorbens umfasst. Ein solches Filtersystem kann vorteilhaft für einen Innenraum eines Kraftfahrzeugs vorgesehen sein, um Atemluft zu filtern, oder auch für ein Brennstoffzellensystem, um die kathodenseitig zugeführte Luft zu filtern.

Gemäß einer günstigen Weiterbildung kann das Filterelement im Wesentlichen gehäuselos so ausgebildet sein, dass das Filterelement eine durchströmbare Außenseite umfasst.

Gemäß einer günstigen Ausgestaltung kann der Adsorptionsfilterbereich aus einem Halbzeug aus wenigstens einer Trägerlage und wenigstens einer fixierten Adsorberlage mit wenigstens einem Adsorbens gebildet sein. Ein Fixieren oder Immobilisieren des Adsorbens in der Adsorberlage verhindert ein Mitreißen von Partikeln aus dem Adsorptionsfilterbereich.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Schnittansicht eines Filterelements in der Art einer Filterkerze mit Wickellage mit Aktivkohle als Adsorbens;
- Fig. 2: eine Frontalansicht auf den Boden des Filterelements wie in Figur 1;
- Fig. 3: eine Frontalansicht auf den Boden des Filterelements wie in Figur 1 mit Dichtraupen an Längsnähten als Versiegelung von Kanten der gewickelten Aktivkohlelage;
- Fig. 4: schematisch einen Trägerkörper mit einer Schicht Aktivkohlepartikel vor dem Aufwickeln;
- Fig. 5: eine Schnittansicht eines Filterelements in der Art einer Filterkerze mit gewickelter Aktivkohlelage mit einem Partikelfilter in einem Stutzenelement;
- Fig. 6: eine Schnittansicht eines Filterelements nach einem Ausführungsbeispiel der Erfindung in der Art einer Filterkerze mit gewickelter Aktivkohlelage mit einem Partikelfilter an einer Innenseite des Filterelements;
- Fig. 7: eine Schnittansicht eines Filterelements nach einem Ausführungsbeispiel der Erfindung in der Art einer Filterkerze mit gewickelter Aktivkohlelage mit einem Partikelfilter an einer Außenseite des Filterelements;
- Fig. 8: schematisch eine Reihe von gekoppelten Filterelementen;
- Fig. 9: schematisch ein Kraftfahrzeug mit einem Filtersystem als Innenraumfilter;
- Fig. 10: schematisch ein Brennstoffzellensystem mit einem Filtersystem in einer Luftzuführung zu einem Brennstoffzellenstapel;
- Fig. 11: den Aufbau eines Halbzeugs mit Trägerlage und fixierter Adsorberlage;
- Fig. 11a: eine Lage einer fixierten Aktivkohleschüttung auf einer Trägerschicht;
- Fig. 11b: eine erste Ausführungsform eines aus zwei Lagen gemäß Fig. 11 gebildeten Halbzeugs einer Adsorptionsfilterlage;
- Fig. 11c: eine zweite Ausführungsform eines aus zwei Lagen gemäß Fig. 11 gebildeten Halbzeugs;
- Fig. 11d: ein aus einer Lage gemäß Fig. 11 und einer Deckschicht gebildetes Halbzeug einer Adsorptionsfilterlage und
- Fig. 15: eine Adsorptionsfilterlage aus zwei Lagen eines Halbzeugs nach Fig. 14.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

In den folgenden Ausführungsbeispielen ist beispielhaft Aktivkohle als Adsorbens eingesetzt. Jedoch auch die Verwendung anderer Adsorbentien denkbar, wie Zeolithe, Silicagele, Metalloxide wie Aluminiumoxid, Kupferoxid oder Manganoxid, Molekularsiebe wie z.B. MOFs, Schichtsilikate, Nanoclays), oder Mischungen von Adsorbentien.

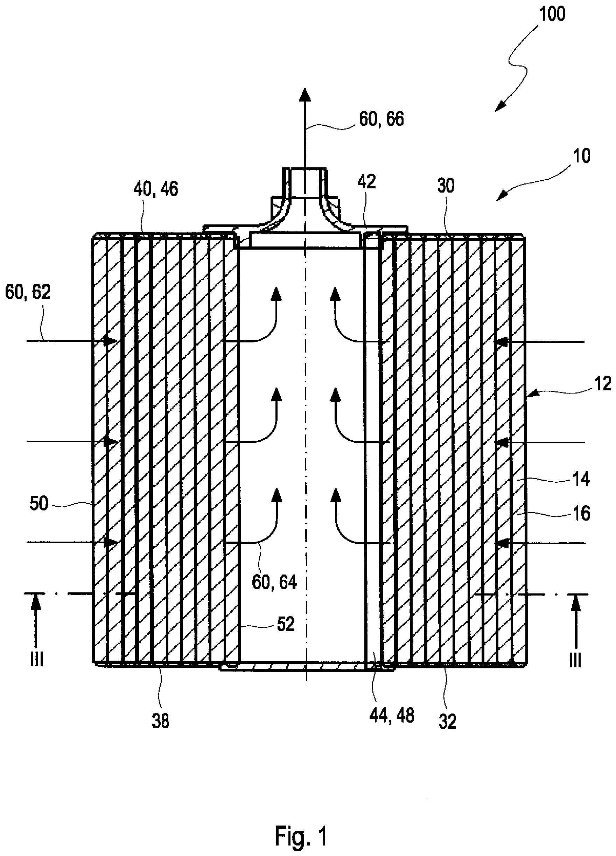

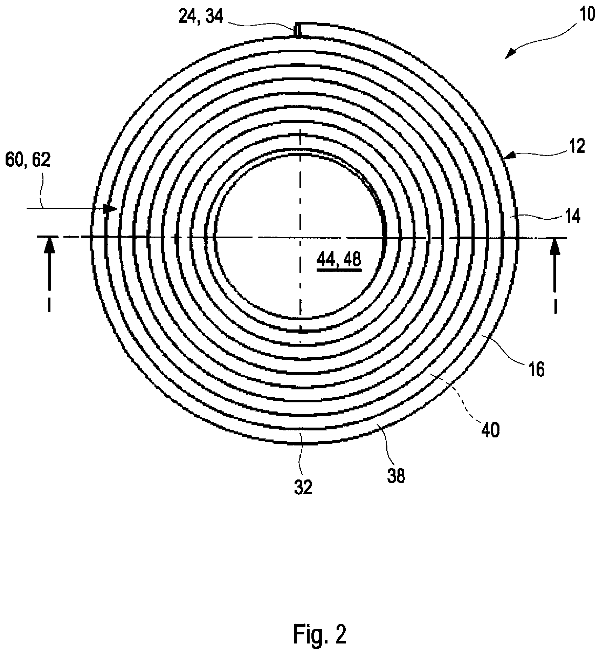

Figur 1 zeigt zur Erläuterung der Erfindung eine Schnittansicht eines Filterelements 10 in der Art einer Filterkerze mit gewickelter Aktivkohlelage 14. Figur 2 zeigt eine Frontalansicht auf eine Stirnseite, hier den Boden 44, des Filterelements 10.

Das Filterelement 10 umfasst einen Filterkörper 12 mit einer in sich geschlossenen Außenseite 50, die eine in sich geschlossene Innenseite 52 umgibt. Zwischen Außenseite 50 und Innenseite 52 ist der Filterkörper 12 angeordnet. Das Filterelement 10 benötigt kein separates Gehäuse, d.h. ist im Wesentlichen gehäuselos, so dass die Außenseite 50 vom zu filternden Medium 60, insbesondere Luft, durchströmbar ist. Die Strömungsrichtung ist hier von der Außenseite 50 zur Innenseite 52, kann in einer anderen Ausgestaltung jedoch auch von der Innenseite 52 zur Außenseite 50 gerichtet sein. Im gezeigten Beispiel strömt Umgebungsluft 62 an der Außenseite 50 in den Filterkörper 12 und tritt an der Innenseite 52 als gereinigte Luft 64 aus und verlässt das Filterelement 10 durch ein Stutzenelement 42 als Reinluft 66.

Stirnseitig ist das Filterelement an einer Stirnseite 30 mit dem Stutzenelement 42 und an der gegenüberliegenden Stirnseite 32 mit einer Bodenplatte 48 versehen, welche den Innenbereich des Filterelements 10 am Boden 44 abdichtet. Das Stutzenelement 42 ist direkt an den Filterkörper 12 angebunden.

Die stirnseitigen Kanten des Filterkörpers 12 sind am Boden 44 des Filterelements 10 mit einer Versiegelung 38 versehen. Ferner sind, wie in Figur 1 dargestellt, die Kanten des Filterkörpers 12 an der gegenüberliegenden Stirnseite 30 mit einer Endplatte 46 um das Stutzenelement 42 abgedichtet. Die Endplatte 46 kann auch eine Versiegelung 40 sein. Die Versiegelungen 38, 40 können insbesondere während des Wickelvorgangs z.B. mit Heißkleber oder dergleichen gebildet werden. Beispielsweise kann das Stutzenelement 42 in die Versiegelung 40 eingebettet sein.

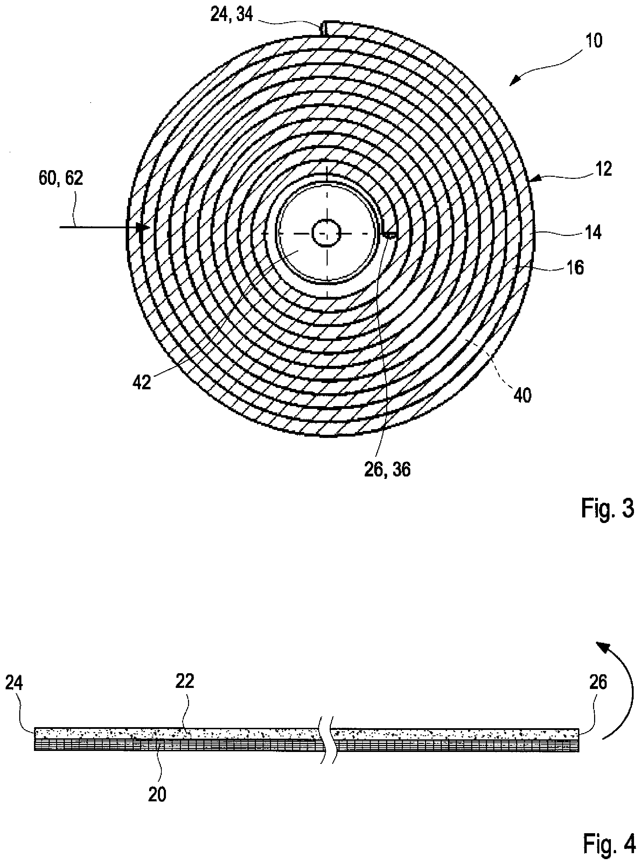

Axiale Kanten 24, 26 des Filterkörpers 12 sind mit einer Versiegelung 34 an der Außenseite 50 und einer Versiegelung 36 an der Innenseite 52 abgedichtet, wie der Frontalansicht in Figur 3 dargestellt ist. Die Versiegelungen 34, 36 können z.B. als Dichtraupen ausgebildet sein. Die Versiegelungen 34, 36 können ebenso während des Wickelvorgangs gebildet werden. Somit kann eine Strömung des zu filternden Mediums 60 durch das Filterelement zwangsweise nur durch den Filterkörper 12 erfolgen.

Das Filterelement 10 weist in diesem Beispiel einen kreisrunden Querschnitt auf, wobei der Filterkörper 12 aus Wickellagen 14 gebildet ist, welche Aktivkohle enthalten. Die immobilisierte Aktivkohle (Adsorbens) bildet das eigentliche Filtermedium 16.

Der Filterkörper 12 ist dabei als Wickel mit Wickellagen 14 ausgebildet, wobei auf einen Trägerkörper 20, z.B. eine Flachlage Faservlies, eine Schicht 22 mit Aktivkohlepartikel aufgetragen ist, und wobei der Trägerkörper 20 durch Aufwickeln des Trägerkörpers 20 einen im Wesentlichen runden Querschnitt erhält, was durch einen gebogenen Pfeil angedeutet ist. Dies ist in Figur 4 skizziert. Dabei kann der innere Durchmesser des Filterkörpers 12 durch einen Durchmesser eines Dorns vorgegeben werden, um den der Trägerkörper 20 gewickelt wird. Die Aktivkohle ist auf dem Trägerkörper 20 immobilisiert und kann hierzu z.B. in eine Klebemasse eingebettet sein. Alternativ oder zusätzlich kann die Schicht 22 auch mit einer weiteren Vlieslage abgedeckt sein (nicht dargestellt).

Zusätzlich zur Aktivkohle können weitere Komponenten zugegeben werden, welche gezielt bestimmte Anteile des zu filternden Mediums 60 aus diesem entfernen. Optional können zwei beschichtete Trägerkörper 20 mit ihrer beschichteten Seite aufeinandergelegt sein (nicht dargestellt) und aufgewickelt werden.

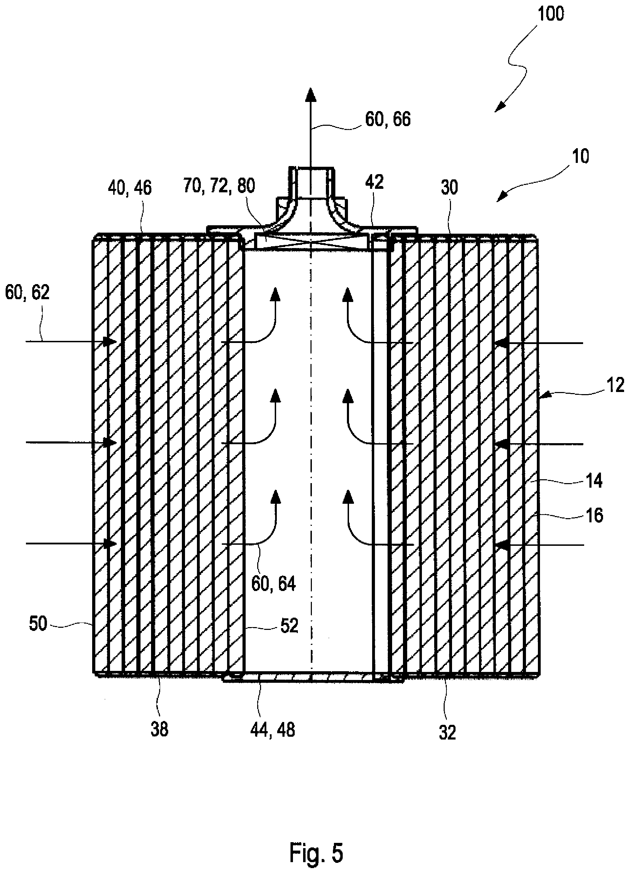

Die Figuren 5 bis 7 zeigen Schnittansichten eines Filterelements 10 entsprechend Figur 1 in der Art einer Filterkerze mit gewickelter Aktivkohlelage, bei denen jeweils ein Partikelfilter 70 oder zusätzlich oder alternativ ein Aerosolfilter 80 an verschiedenen Positionen dargestellt ist. Das Filterelement 10 ist vorteilhaft in einem erfindungsgemäßen Filtersystem 100 angeordnet, in dem eine Zufuhr des zu filternden Mediums 60, insbesondere Umgebungsluft, und Ableitung des gefilterten Mediums 60, insbesondere Reinluft, erfolgt. Das Filterelement 10 ist leicht austauschbar und kann mit seinem Stutzenelement 42 auf einfache Weise an ein Leitungssystem (nicht dargestellt) angekoppelt werden, etwa mittels einer Schnellkuppelverbindung.

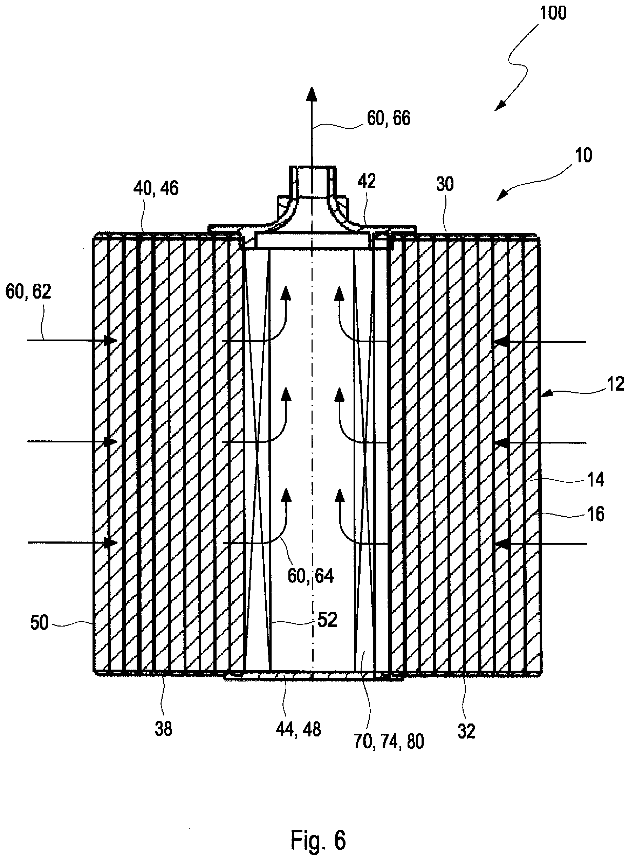

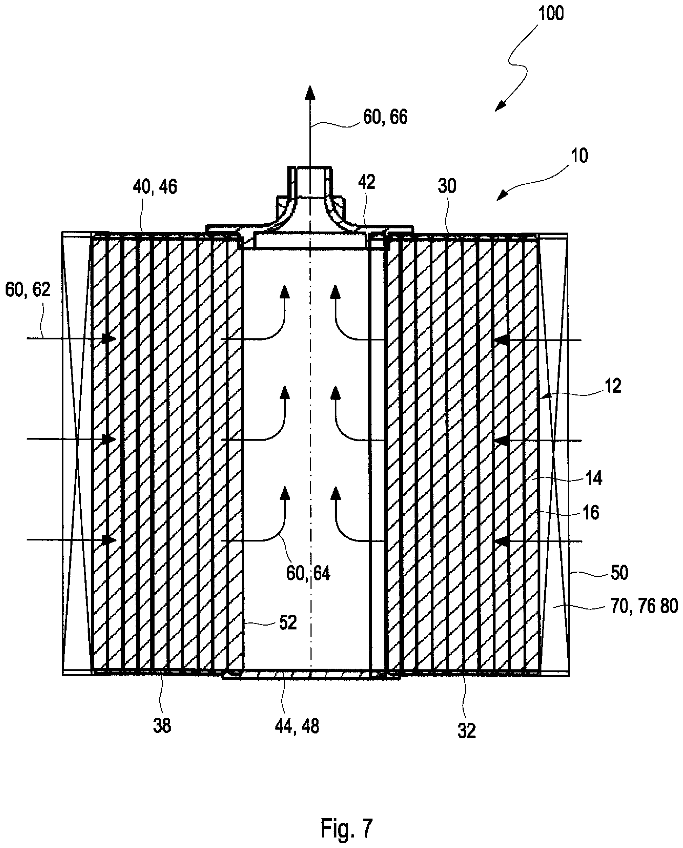

In Figur 5 ist ein Partikelfilter 72 im Stutzenelement 42 angeordnet. In Figur 6 ist ein Partikelfilter 74 an der Innenseite 52 des Filterkörpers 12 angeordnet. In Figur 7 ist ein Partikelfilter 76 an der Außenseite 50 des Filterkörpers 12 angeordnet. Selbstverständlich sind auch Ausgestaltungen denkbar, bei denen derartige zusätzliche Filter an mehreren Positionen gleichzeitig vorgesehen sind.

Eine weitere Möglichkeit der Applikation besteht darin, dass der Filterkörper 12 in ein Rohr eingefügt wird, welches eine poröse bzw. gitterartige Ausprägung aufweist und direkt in der Ansaugstrecke fest verbaut ist, wie z.B. in einem Luftansaugsystem von stationären Verbrennungsanlagen. Dabei kann die Länge des Filterkörpers 12 bis zu mehreren Metern betragen, über die Luft über den inneren Querschnitt angesaugt wird. Der innere Querschnitt kann durch ein poröses oder gitterartiges Mittelrohr in steifer oder flexibler Ausprägung (je nach Einbausituation und Länge) bei größeren Längen den inneren Querschnitt stabil und offen halt. Bei einer derartigen Ausführung können die Durchströmungsgeschwindigkeiten im zu filternden Medium reduziert werden und die Kapazität des Filters erhöht werden.

Vorteilhaft ist mit dem Filterelement 10 ein auswechselbarer Partikelfilter 70 bzw. Grobstaubfilter gekoppelt.

Neben einer physikalischen Mischung von zwei oder mehreren Adsorbentien ist auch der Einsatz von zwei an einer Grenzfläche getrennten Adsorbensschichten innerhalb einer Wickellage denkbar. Hierbei können auch wiederum Mischungen aus zwei oder mehreren Adsorbentien verwendet werden.

Zur weiteren Verbesserung der Adsorptionsperformance können als Trägerkörper und/oder Partikelfilterlagen auch spezielle faserförmige oder schaumförmige Materialien zum Einsatz kommen. Beispiele hierfür sind: Aktivkohlevliese oder Aktivkohlematten sowie Vliese oder Schäume, die mit Adsorbentien imprägniert sind (z.B. Aktivkohle, Zeolithe, Silicagele, Metalloxide wie Aluminiumoxid, Kupferoxid oder Manganoxid, Molekularsiebe wie z.B. MOFs, Schichtsilikate, Nanoclays).

Durch das einfache Design und den einfachen Aufbau des Filterelements 10 kann eine Standzeiterhöhung und eine Reduzierung der Durchströmungsgeschwindigkeit erreicht werden, so dass die Filterwirkung besonders effektiv ist. Es können freie Räume (z.B. im Schornstein) genutzt werden.

Je nach Wechselintervall kann der Nutzer entweder das Aktivkohle-Filterelement 10 oder den Partikelfilter wechseln und muss nicht das komplette Filtersystem 100 wechseln. Zudem können verschiedene Filterelementtypen (z.B. Filterelemente mit Feinfasern oder Feinstfasern) je nach Anforderungsprofil des Nutzers an das Aktivkohle-Filterelement adaptiert werden

Die Partikelfiltration kann von einem plissierten Filterelement (nicht dargestellt) übernommen werden. Alternativ oder zusätzlich dazu kann eine nicht plissierte Grobstaubmatte einfach als Rundelement über das Aktivkohle-Filterelement gestülpt werden oder über einen Klettverschluss oder andere Haftelemente am Aktivkohle-Filterelement angebracht werden. Als Grobstaubmatte kann beispielsweise ein Vlies oder ein Halbzeug aus offenporigem Schaum eingesetzt werden.

Hinsichtlich der unterschiedlichen Anforderungen bezüglich Volumenströmen und Standzeit kann das gewickelte Filterelement 10 als ein Baukasten betrachtet werden, bei dem über die Zylinderhöhe und den Durchmesser auf die verschiedenen Anforderungen unter Verwendung der gleichen Anschlusskomponenten reagiert werden kann, wodurch vorteilhaft Werkzeugkosten eingespart werden können.

Eine Standzeitverlängerung des Filterelements 10 kann bei stark partikelhaltiger Luft und gering chemisch belasteter Luft erreicht werden. Immobilisierte Adsorberlagen bzw. Adsorbensschichten zeigen Vorteile bzgl. mechanischer Stabilität und Homogenität.

Durch deutlich höhere Verweilzeiten kann eine höhere Effizienz und damit ein geringerer Durchbruch im Filterelement 10, sowie eine höhere Filterkapazität erreicht werden. Eine Anpassung der Adsorptionsperformance an das jeweilige Anforderungsprofil sowie den Bauraum durch eine geeignete Materialauswahl lässt sich leicht realisieren, etwa durch Variation der eingesetzten Materialmenge, d.h. des eingesetzten Flächengewichts.

Eine Kombination mehrerer Adsorbentien ist durch definierte Wickellagen möglich, wobei eine anströmseitige oder abströmseitige Platzierung die Anpassung an eine Sorptionskinetik bestimmter Zielgase ermöglicht. Da Aktivkohle eine gewisse Selektivität bei der Adsorption aufweist, werden nicht alle relevanten Schadgase gleich gut aufgenommen, insbesondere bei komplexen Gasgemischen, wie sie in der Realität auftreten. Außerdem können bereits adsorbierte Moleküle durch andere Stoffe, für die die Aktivkohle eine höhere Affinität aufweist, verdrängt werden. Durch den Einsatz von spezialisierten Adsorbentien können diese Effekte kompensiert werden. Relevante Materialgruppen für diesen Zweck sind Zeolithe, Silicagele, Aluminiumoxid sowie andere poröse Metalloxide (z.B. Kupferoxid, Manganoxid) und Molekularsiebe (z.B. MOFs, Schichtsilikate, Nanoclays). Weitere Vorteile bei Einsatz unterschiedlicher Adsorbentien bestehen in der individuellen Anpassung der Adsorptionsperformance an die Anforderungen für bestimmte Gase. Bei Einsatz von Adsorbentien, die Schadgase chemisch binden, kann eine spätere Desorption der Schadgase verhindert werden. Durch eine gezielte räumliche Anordnung der Materialien in den Wickellagen können weitere vorteilhafte Effekte ausgenutzt werden. So kann z.B. die erste Wickellage des Filterelements 10 als Schutzschicht fungieren, indem ein spezialisiertes Material mit einer hohen Affinität und Kapazität für ein Gas A eingesetzt wird. Somit werden die dahinter liegenden Wickellagen (z.B. Aktivkohle mit guter Breitenwirkung) vor Gas A geschützt, was die Adsorptionsleistung für ein (dem Gas A ähnliches) Gas B verbessert, da keine Poren durch das Gas A blockiert werden und damit nicht zwei Molekültypen um gleich große Poren in der Aktivkohle konkurrieren.

Durch eine entsprechende Mischung können theoretisch beliebig viele Materialien in einer einzelnen Wickellage untergebracht werden. So kann die Adsorptionsperformance bei optimaler Nutzung des Bauraums an die Anforderungen angepasst werden

Optional mögliche plissierte Partikelfilter erhöhen als Vorfilter die Standzeit des Filterelements 10 bzw. minimieren als nachgeschaltetem Sicherheitselement ("Polizeifilter") die Kontamination des zu schützenden Systems (z.B. den Austritt von Adsorbenspartikeln wie etwa Aktivkohlestaub).

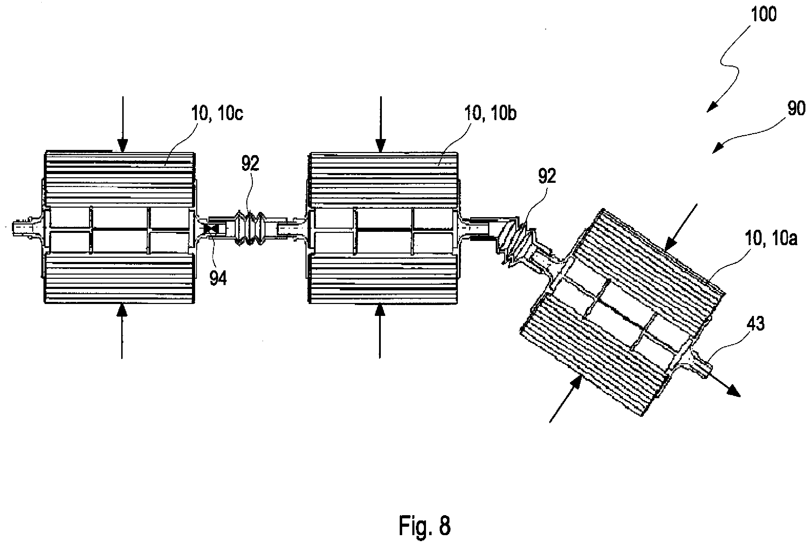

Figur 8 zeigt eine vorteilhafte Anordnung 90 in Form einer Reihenschaltung einer Mehrzahl von Filterelementen 10, hier als Beispiel mit drei Filterelementen 10a, 10b, 10c. Eine solche Anordnung ist besonders günstig bei Filtersystemen 100 mit langen Filterstrecken und/oder hohen Mediendurchflüssen.

Eine derartige Reihenschaltung kurzer Filterelemente 10 erlaubt es, den Bauraum effektiver zu nutzen, wird eine Vielzahl n, jedoch mindestens 2, einzelnen Filterelemente 10 durch Zwischenstücke 92 miteinander verbunden, wobei die Zwischenstücke 92 vorteilhaft flexibel, etwa als Faltenbalg, ausgebildet sein können. Hierdurch kann sich die gesamte Filteranordnung 90 an den Bauraum anpassen.

Das flexible Verbindungselement 92 kann auch ein fester Bestandteil des Stutzenelements 32 (Fig. 1, 5, 6, 7) sein bzw. diesen darstellen. Die Flexibilität kann entweder durch den verwendeten Werkstoff für das Verbindungselement 92 selbst oder durch eine definierte geometrische Form, z.B. Faltenbalg, erreicht werden. Durch die Aufteilung des gesamten Luftstroms in n-Segmente bzw. Filterelemente 10 besteht die Möglichkeit, den Leitungsquerschnitt mit zunehmender Entfernung von dem Ausgang der Anordnung 90 zu reduzieren.

Die Akustik der Luftansaugstrecke kann durch in die Verbindungsstücke 92 integrierte, an sich bekannte Akustikmaßnahmen wie z.B. Lambda-Viertel Rohre, Resonatoren oder andere geräuschmindernde Maßnahmen positiv beeinflusst werden. Auch können zumindest teilweise in und/oder zwischen den Filterelementen 10 Sensoren (nicht dargestellt) vorgesehen sein, z.B. Temperatursensoren, Strömungsgeschwindigkeitssensoren, Gassensoren, Feuchtigkeitssensoren, Drucksensoren etc..

Je nach Lastzustand und damit verbundenem Bedarf an gefiltertem Medium z.B. Luft besteht auch die Möglichkeit zur Integration von Regelelementen, die dafür sorgen, dass ein Teil der Filterstrecke abgeschaltet wird. Diese Abschaltung kann durch ein elektronisches Regelelement 94 oder durch ein mit Druck gesteuertes oder auf Druckveränderungen reagierendes Element (z.B. Unterdruckdose, vorgespannte Klappe oder dergleichen) erfolgen.

So kann beispielsweise im dargestellten Beispiel von drei Filterelementen 10a, 10b, 10c, welche die Filterstrecke bilden, das vom Ausgang 43 der Filterstrecke am weitesten entfernte Filterelement 10c mit weniger Speicherkapazität (chemisch und/oder physikalisch) ausgelegt werden, da dieses Filterelement 10c nur bei Spitzenlast erforderlich ist, und die Spitzenlast nicht den Regelfall bezüglich den Betriebsbedingungen darstellt.

Sollte der Druckverlust der ersten zwei Filterelemente 10a, 10b zu hoch werden, kann das dritte Filterelement 10c bis zur Durchführung des Filterelementwechsels hinzu geschaltet werden. Die Zuschaltung bzw. Abschaltung ist auch im Falle einer temporären starken Schadgasbelastung von Vorteil, da dort die abgeschaltete Filterfläche des Filterelements 10c hinzugeschaltet werden kann und somit bei gleicher Last die Durchflussgeschwindigkeit in den einzelnen Filterelementen 10a, 10b, 10c reduziert wird. Dadurch wird die Verweilzeit und somit die Kontaktwahrscheinlichkeit der Schadgase im Filterelement erhöht, was zu einer höheren Abscheidung der Schadgase führt.

Selbstverständlich können auch mehr als ein Filterelement 10 bedarfsweise hinzugeschaltet werden, insbesondere dann, wenn mehr als drei Filterelemente 10 in Reihe geschaltet sind. Zweckmäßigerweise sind die am Ende der Reihenschaltung vom Ausgang der Reihenschaltung entfernten Filterelemente 10 zuschaltbar und/oder abschaltbar.

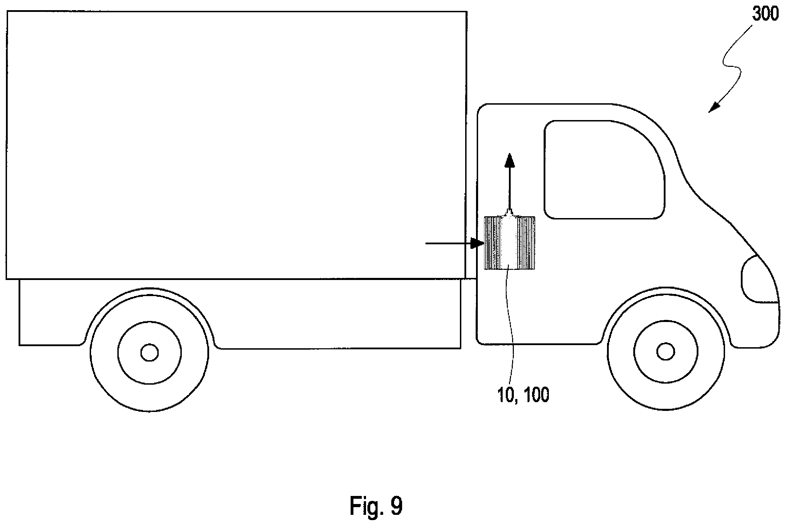

Besonders vorteilhaft ist die Verwendung eines erfindungsgemäßen Filtersystems 100 bzw. Filterelements 10 als Luftfilter, insbesondere als Innenraumluftfilter, eines Kraftfahrzeugs 300 wie in Figur 9 vereinfacht angedeutet ist. Umgebungsluft wird angesaugt, durch das Filtersystem 100 geleitet, dabei durch das Filterelement 10 gereinigt, und in einen Innenraum des Fahrzeugs 300 abgegeben. Dabei kann das Filterelement 10 leicht gewechselt werden. Ggf. kann dieses mit einem oder mehreren separaten Partikelfiltern und/oder Aerosolfiltern gekoppelt sein, die beispielsweise bei Bedarf separat gewechselt werden können.

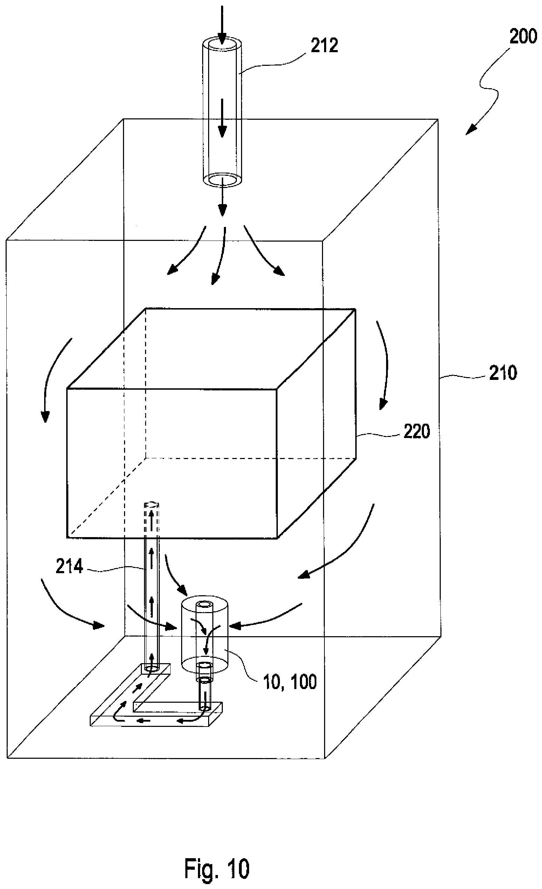

Figur 10 zeigt schematisch ein Brennstoffzellensystem 200 mit einem Filtersystem 100 in einer Luftzuführung 212, 214 zu einem Brennstoffzellenstapel 220. Das Brennstoffzellensystem 200 ist nur grob schematisch dargestellt, übliche und dem Fachmann bekannte Komponenten sind nicht ausgeführt. Das Brennstoffzellensystem 200 ist mit einem Gehäuse 210 dargestellt, in das die Luft über die Luftzuführung 212 eintritt und über das Filtersystem 100 und die daran angeschlossene Luftzuführung 214 dem Brennstoffellenstapel 220 als Kathodenluft zugeführt wird.

Es ist kein separates Gehäuse für das Filterelement 10 erforderlich. Das Filterelement 10 dient dabei als Kathodenluftfilter und kann z.B. eine Grobstaubmatte zur Partikelfiltration anstelle eines gefalteten (plissierten) Partikelfilters bzw. zusätzlich zu einem Partikelfilter aufweisen. Die Grobstaubmatte kann als Schaum oder Vliesmatte ausgeführt sein.

Das Partikelfilterelement kann dem Filterelement 10 vorgeschaltet sein und hat dann die Funktion eines Vorfilters. Das Partikelfilterelement kann dem Filterelement 10 auch nachgeschaltet sein und hat dann die Funktion eines sog. "Polizeifilters". Ist das Partikelfilterelement nicht oder nur teilweise zur Filtration von Aerosolen geeignet, ist es auch möglich, ein zweites Filterelement, das speziell für die Filtration von Aerosolen geeignet ist, vorzugsweise hinter dem Partikelfilterelement anzubringen. Auch eine Kombination aus Vorfilter, Filterelement 10 und nachgeschaltetem Sicherheitselement ("Polizeifilter") ist denkbar.

Der vorgeschaltete Partikelfilter hält Staubpartikel und Aerosole von dem Filterelement 10 fern, so dass ein vorzeitiger Druckverlustanstieg in dem Filterelement 10, verursacht durch eingelagerte Staubpartikel, vermieden wird. Damit wird die Standzeit (Lebensdauer) des Filterelements 10 erhöht. Der nachgeschaltete Partikelfilter hält neben aus dem Luftstrom aufgenommenen Staubpartikeln und Aerosolen auch eventuell aus den Wickellagen des Filterelements 10 austretende Aktivkohlepartikel zurück. Damit wird z.B. eine zusätzliche Schutzfunktion des Brennstoffzellensystems realisiert und jegliche Beschädigung durch partikulare Verunreinigungen vermieden.

Brennstoffzellenfahrzeuge benötigen auf der Kathodenseite des Brennstoffzellenstapels 220 einen Luftfilter, welcher auch Schadgase abscheidet. Dies wird in Form eines physikalischen und chemischen Filters realisiert. Vorteilhaft sind dabei unter anderem Aktivkohlefilter, deren Filterkörper 10 als Rundelement mit Wickellage, wie vorstehend beschrieben wurde, ausgebildet sind. Aufgrund der großen Massenströme bei leistungsstarken Brennstoffzellen (z.B. 80 kW) sind bei solchen Rundelementen sehr lange Filterkörper erforderlich, die bezüglich des Bauraums problematisch werden können, um die erforderliche Filtrationsfläche und Kontaktzeit, vor allem auf das adsorberhaltige Filterelement 10 bezogen, anbieten zu können.

Besonders vorteilhaft ist daher eine geometrische Aneinanderreihung von einer Mehrzahl von Filterelementen 10, wie in der Anordnung in Figur 9 beschrieben ist. Die geometrische Aneinanderreihung entspricht strömungsmäßig einer Parallelschaltung der Filterelemente 10. Besonders vorteilhaft ist zur Darstellung einer ausreichenden Dynamik bei der Kathodenluftversorgung des Brennstoffzellenstapels 220 die Möglichkeit, ein oder mehrere Filterelemente 10 am Ende der Reihe von Filterelementen 10 entfernt von dem Brennstoffzellenstapel 220 bzw. dem Reinluftausgang aus der Reihe von Filterelementen 10 bedarfsweise zuzuschalten oder abzuschalten. Würde man ein Filterelement 10 für den kompletten Durchfluss z.B. eines 80 kW-Brennstoffzellensystems als einzelnen Filterkörper mit Wickellagen darstellen, würde dieses, was den Bauraum betrifft, in Abhängigkeit der Standzeit sehr hoch werden, was wiederum in der Regel die Bauraumsituation deutlich erschwert. Weiterhin kann auf diese Weise aus einzelnen Filterelementen 10 ein Filtersystem wie in einem Baukastensystem aufgebaut werden, was kostengünstig ist.

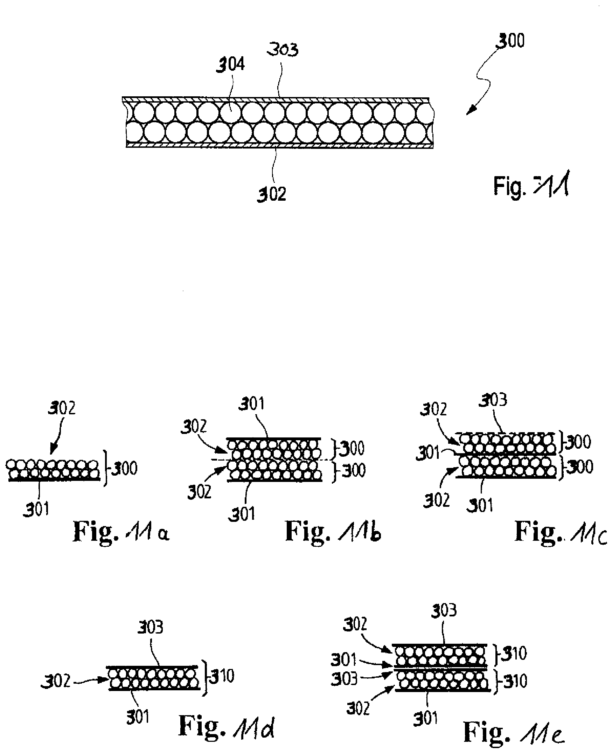

Figur 11 illustriert einen prinzipiellen Aufbau eines Halbzeugs mit einer Lage 300 mit einer fixierten Schüttung von Adsorbenspartikeln, umfassend eine Trägerlage 302, eine Deckschicht 303 eine Adsorberlage 304, z.B. in Form einer Schüttlage, mit immobilisierten Adsorbenspartikeln. Ein solches Halbzeug kann zur Herstellung eines Wickelkörpers eines Filterelements eingesetzt werden.

Den Figuren 11a - 11e sind weitere mögliche Aufbauten einer Adsorptionsfilterlage für ein erfindungsgemäßes Filterelement zu entnehmen. Fig. 11a zeigt eine Lage 300 einer fixierten Schüttung von Aktivkohlepartikeln, umfassend eine Trägerschicht 301 und eine Schüttlage 302 mit Aktivkohlepartikeln.

Zwei dieser Lagen können auf verschiedene Weise zu Halbzeugen verbunden werden, welche einlagig oder mehrlagig eine Adsorptionsfilterlage bilden können. In der Ausführungsform gemäß Fig. 11b werden zwei derartige Lagen 300 derart aufeinander angeordnet, dass jeweils die Schüttlagen 302 aufeinander liegen, wobei ein Halbzeug gebildet wird, welches beidseitig von den Trägerlagen 301 begrenzt wird. Mehrere dieser Halbzeuge kann zur Bildung einer Gesamtadsorptionfilterlage aufeinander gestapelt werden.

In der Ausführungsform nach Fig. 11c sind zwei derartige Lagen 300 in gleicher Orientierung aufeinander angeordnet, es kann jedoch auch eine größere Anzahl von derartigen Lagen 300 auf diese Weise aufeinanderliegend angeordnet sein. Um eine abgeschlossene Adsorptinosfilterlage zu bilden, kann eine Deckschicht 303 auf die Schüttlage 302 aufgebracht werden.

Fig. 11d zeigt eine Ausführungsform eines Halbzeugs 310 mit einer Lage 302 einer fixierten Schüttung aus Aktivkohlepartikeln, die auf eine Trägerschicht 301 aufgebracht und von einer Deckschicht 303 bedeckt sind. Das Halbzeug 310 kann entweder einlagig oder wie in Fig. 11e gezeigt in einer zwei- oder mehrlagigen Anordnung von aufeinanderliegenden Halbzeugen 310 eine Gesamtadsorptionsfilterlage bilden.
Die Schüttlagen 302 sind in den Ausführungsformen mittels feiner Netze von Klebstofffäden mit den jeweiligen Träger- und Deckschichten verbunden, es können jedoch auch andere Verbindungsarten gewählt werden.
Die Zu- bzw. Abschaltung ist auch im Falle einer starken Schadgasbelastung wie z.B. in Tunneln mit hoher Luftunreinheit, von Vorteil, da dort die abgeschaltete Filterfläche hinzugeschaltet werden kann und somit bei gleicher Last die Durchflussgeschwindigkeit in den einzelnen Filterelementen 10 reduziert wird. Dadurch wird die Verweilzeit und somit die Kontaktwahrscheinlichkeit der Schadgase im Filterelement 10 erhöht, was zu einer höheren Abscheidung der Schadgase führt.

Im Gegensatz zu bisher eingesetzten konventionellen Filterelementen, wie plissierten Filterelemente, bieten die erfindungsgemäßen Filterelemente 10 mit Wickellagen relativ geringe Strömungsgeschwindigkeiten und erlauben eine günstige, erhöhte Kontaktzeit des zu filternden Mediums mit dem Filtermedium, was für eine zuverlässige Adsorption bzw. Absorption der Schadstoffe im Filterelement 10 sorgt. Damit wird die Funktionalität des Filterelements 10 bzw. Filtrationseffizienz wie auch die Adsorptionseffizienz verbessert.

## Patentansprüche

1. Filterelement (10), umfassend einen Filterkörper (12) mit einer in sich geschlossenen Außenseite (50), die eine in sich geschlossene Innenseite (52) umgibt, wobei die Innenseite (52) einen zentralen Strömungsraum umschließt, wobei zwischen Außenseite (50) und Innenseite (52) wenigstens ein Filtermedium (16) angeordnet ist, und wobei der Filterkörper (12) ein Wickel umfassend Wickellagen (14) mit wenigstens einem Adsorbens ist, **dadurch gekennzeichnet, dass** der Filterkörper (12) einen Trägerkörper (20) umfasst, auf den eine Schicht (22) mit wenigstens einem Adsorbens aufgetragen ist, und der Trägerkörper (20) durch Aufwickeln des Trägerkörpers (20) einen im Wesentlichen runden Querschnitt erhalten hat, wobei der Filterkörper (12) strömungsmäßig mit wenigstens einem Partikelfilter (70) gekoppelt ist, dessen Partikelabscheidemedium auf die Mantelfläche des Wickels in Form einer Flachlage oder als gefaltete Ausführung aufgebracht ist.

2. Filterelement nach Anspruch 1, wobei der Trägerkörper (20) ein flacher Trägerkörper ist.

3. Filterelement nach Anspruch 1 oder 2, wobei als Adsorbens ein Granulat verwendet wird, das mittels Klebefäden, Klebepunkten oder Klebefolien auf dem Trägerkörper immobilisiert ist.

4. Filterelement nach einem der vorhergehenden Ansprüche, wobei die Wickellage (14) an ihren Kanten (26) eine Versiegelung (34, 36, 38, 40) aufweist.

5. Filterelement nach einem der vorhergehenden Ansprüche, wobei die Versiegelung (34, 36, 38, 40) eine stirnseitige Endplatte (46, 48) bildet.

6. Filterelement nach einem der vorhergehenden Ansprüche, wobei der Filterkörper (12) strömungsmäßig mit wenigstens einem Aerosolfilter (80) gekoppelt ist.

7. Filterelement nach einem der vorhergehenden Ansprüche, wobei das Filterelement (10) im Wesentlichen gehäuselos so ausgebildet ist, dass das Filterelement (10) eine durchströmbare Außenseite (50) umfasst.

8. Filterelement nach einem der vorhergehenden Ansprüche, wobei das wenigstens eine Adsorbens wenigstens ein Material aus der Gruppe Aktivkohle, Zeolithe, Silicagele, Metalloxide, Molekularsiebe, Schichtsilikate, Nanoclays umfasst.

9. Verwendung eines Filterelements (10) nach einem der vorhergehenden Ansprüche, als Luftfilter, insbesondere als Innenraumluftfilter eines Kraftfahrzeugs.

10. Verwendung eines Filterelements (10) nach einem der vorhergehenden Ansprüche als Luftfilter in einer Brennstoffzellenanlage.

11. Anordnung (90) von Filterelementen (10) nach einem der Ansprüche 1 - 8, wobei wenigstens zwei Filterelemente (10) strömungsmäßig in Reihe geschaltet sind.

12. Anordnung nach Anspruch 11, wobei ein oder mehr Filterelemente (10) strömungsmäßig bedarfsweise zuschaltbar oder abschaltbar sind.

13. Filtersystem (100) mit einem Filterelement (10) nach einem der Ansprüche 1 bis 8, umfassend einen Filterkörper (12) mit einer in sich geschlossenen Außenseite (50), die eine in sich geschlossene Innenseite (52) umgibt, wobei zwischen Außenseite (50) und Innenseite (52) wenigstens ein Filtermedium (16) angeordnet ist, wobei der Filterkörper (12) wenigstens bereichsweise wenigstens eine Wickellage (14) mit wenigstens einem Adsorbens umfasst.

14. Filtersystem nach Anspruch 13, wobei das Filterelement (10) im Wesentlichen gehäuselos so ausgebildet ist, dass das Filterelement (10) eine durchströmbare Außenseite (50) umfasst.

## Claims

1. Filter element (10), comprising a filter body (12) with a self-contained exterior side (50) which surrounds a self-contained interior side (52), wherein the interior side (52) encloses a central flow chamber, wherein at least one filter medium (16) is disposed between exterior side (50) and interior side (52), and wherein the filter body (12) is a winding comprising winding layers (14) with at least one adsorbent, **characterized in that** the filter body (12) comprises a carrier body (20) to which a layer (22) with at least one adsorbent is applied, and the carrier body (20) has received a substantially round cross section by wounding up the carrier body (20), wherein the filter body (12) is coupled fluidically with at least one particulate filter (70), the particulate separation medium of which is applied to the circumferential surface of the winding in the form of a flat layer or as a folded embodiment.

2. Filter element according to claim 1, wherein the carrier body (20) is a flat carrier body.

3. Filter element according to claim 1 or 2, wherein a granulate, which is immobilized on the carrier body by means of adhesive threads, adhesive points or adhesive films, is used as adsorbent.

4. Filter element according to one of the preceding claims, wherein the winding layer (14) features a sealing (34, 36, 38, 40) at its edges (26).

5. Filter element according to one of the preceding claims, wherein the sealing (34, 36, 38, 40) forms a frontal end plate (46, 48).

6. Filter element according to one of the preceding claims, wherein the filter body (12) is fluidically coupled with at least one aerosol filter (80).

7. Filter element according to one of the preceding claims, wherein the filter element (10) is substantially realized without housing in such a way that the filter element (10) comprises an exterior side (50) allowing passage therethrough.

8. Filter element according to one of the preceding claims, wherein the at least one adsorbent comprises at least a material from the group activated carbon, zeolites, silica gels, metallic oxides, molecular sieves, phyllosilicates, nano clays.

9. Use of a filter element (10) according to one of the preceding claims as air filter, in particular as passenger compartment air filter of a motor vehicle.

10. Use of a filter element (10) according to one of the preceding claims as air filter in a fuel cell installation.

11. Arrangement (90) of filter elements (10) according to one of the claims 1 to 8, wherein at least two filter elements (10) are fluidically connected in series.

12. Arrangement according to claim 11, wherein one or more filter elements (10) can fluidically be switched on or off, if required.

13. Filter system (100) with a filter element (10) according to one of the claims 1 to 8, comprising a filter body (12) with a self-contained exterior side (50) which surrounds a self-contained interior side (52), wherein at least one filter medium (16) is disposed between exterior side (50) and interior side (52), wherein the filter body (12) comprises at least in some areas at least one winding layer (14) with at least one adsorbent.

14. Filter system according to claim 13, wherein the filter element (10) is substantially realized without housing in such a way that the filter element (10) comprises an exterior side (50) allowing passage therethrough.

## Revendications

1. Élément filtrant (10), comprenant un corps de filtre (12) avec une face extérieure (50) fermée sur elle-même qui entoure une face intérieure (52) fermée sur elle-même, dans lequel la face intérieure (52) entoure un espace d'écoulement central, dans lequel au moins un milieu filtrant (16) est disposé entre la face extérieure (50) et la face intérieure (52) et dans lequel le corps de filtre (12) est une bobine comprenant des couches d'enroulement (14) avec au moins un adsorbant, **caractérisé en ce que** le corps de filtre (12) comprend un corps de support (20) sur lequel est appliquée une couche (22) avec au moins un adsorbant, et le corps de support (20) a reçu une section transversale essentiellement ronde en enroulant le corps de support (20), dans lequel le corps de filtre (12) est accouplé fluidiquement à au moins un filtre à particules (70) dont le milieu pour la séparation des particules est appliqué sur la surface circonférentielle de la bobine sous forme d'une couche plate ou d'une version pliée.

2. Élément filtrant selon la revendication 1, dans lequel le corps de support (20) est un corps de support plat.

3. Élément filtrant selon la revendication 1 ou 2, dans lequel un granulé, qui est immobilisé sur le corps de support au moyen de fils adhésifs, de points adhésifs ou de films adhésifs, est utilisé en tant qu'adsorbant.

4. Élément filtrant selon l'une des revendications précédentes, dans lequel la couche d'enroulement (14) présente un scellement (34, 36, 38, 40) sur ses bords (26).

5. Élément filtrant selon l'une des revendications précédentes, dans lequel le scellement (34, 36, 38, 40) forme une plaque d'extrémité frontale (46, 48).

6. Élément filtrant selon l'une des revendications précédentes, dans lequel le corps de filtre (12) est accouplé fluidiquement au moins à un filtre pour aérosols (80).

7. Élément filtrant selon l'une des revendications précédentes, dans lequel l'élément filtrant (10) est essentiellement conçu sans boîtier de telle manière que l'élément filtrant (10) comprend une face extérieure (50) pouvant être parcourue par un flux.

8. Élément filtrant selon l'une des revendications précédentes, dans lequel l'adsorbant, au moins au nombre d'un, comprend au moins un matériau choisi dans le groupe charbon actif, zéolites, gels de silice, oxydes métalliques, tamis moléculaires, silicates lamellaires, nano-argiles.

9. Utilisation d'un élément filtrant (10) selon l'une des revendications précédentes en tant que filtre à air, notamment en tant que filtre à air d'habitacle d'un véhicule automobile.

10. Utilisation d'un élément filtrant (10) selon l'une des revendications précédentes, en tant que filtre à air dans une installation de piles à combustible.

11. Ensemble (90) d'éléments filtrants (10) selon l'une des revendications 1 à 8, dans lequel au moins deux éléments filtrants (10) sont fluidiquement connectés en série.

12. Ensemble selon la revendication 11, dans lequel un ou plusieurs éléments filtrants (10) peuvent être, en cas de besoin, raccordés ou débranchés fluidiquement.

13. Système de filtre (100) avec un élément filtrant (10) selon l'une des revendications 1 à 8, comprenant un corps de filtre (12) avec une face extérieure (50) fermée sur elle-même qui entoure une face intérieure (52) fermée sur elle-même, dans lequel au moins un milieu filtrant (16) est disposé entre la face extérieure (50) et la face intérieure (52), dans lequel le corps de filtre (12) comprend au moins dans certaines sections au moins une couche d'enroulement (14) avec au moins un adsorbant.

14. Élément filtrant selon la revendication 13, dans lequel l'élément filtrant (10) est essentiellement conçu sans boîtier de telle manière que l'élément filtrant (10) comprend une face extérieure (50) pouvant être parcourue par un flux.
